# EUROPEAN PATENT APPLICATION

(11) **EP 3 771 640 A1**
(43) Date of publication of application: **03.02.2021**
(21) Application number: 19215950.7
(22) Date of filing: 13.12.2019
(51) Int. Cl.: B64D 11/04

(54) **AIRCRAFT GALLEY PLUMBING SYSTEM**

(30) Priority: 30.07.2019 US 201916526651
(71) Applicant: BE AEROSPACE, INC., North Carolina 27105 (US)
(72) Inventor: BURD, Peter J.L., Burry Port, South Wales SA 16 0RB (GB); PEARCE, Nicholas J.W., Mukilteo, WA 98275 (US)
(74) Representative: Dehns

(57) **Abstract**

An aircraft galley plumbing system (100) includes a potable water sub-system (102), a waste water sub-system (120), and a valve (106) in fluid communication with the potable water sub-system and the waste water sub-system. The potable water sub-system includes a plurality of potable water supply lines (104) configured to provide potable water from a potable water source to at least one galley installation. The waste water sub-system includes a plurality of drain lines (122) configured to receive waste water from the at least one galley installation, a plurality of waste water sumps (124) configured to receive waste water from the plurality of drain lines, and a main drain line (128). The potable water sub-system is configured to be filled from the potable water source when the valve is in a first operational configuration. The potable water sub-system is configured to empty into the waste water sub-system via the valve when the valve is in a second operational configuration.

## Description

### BACKGROUND

An aircraft galley plumbing system may include potable water and waste water sub-systems. The sub-systems may be in fluid communication with and/or proximate to faucets and drains, galley installations, and other components within an aircraft galley. The size of the aircraft galley may dictate the arrangement and compactness of the aircraft galley plumbing system.

### SUMMARY

An aircraft galley plumbing system is disclosed. In one or more embodiments, the aircraft galley plumbing system includes a potable water sub-system. The potable water sub-system includes a plurality of potable water supply lines. A potable water supply line of the plurality of potable water supply lines is configured to provide potable water from a potable water source to a galley installation. The aircraft galley plumbing system further includes a waste water sub-system. The waste water sub-system includes a plurality of drain lines. A drain line of the plurality of drain lines is configured to receive waste water from the at least one galley installation. The waste water sub-system further includes a plurality of waste water sumps. A waste water sump of the plurality of waste water sumps is configured to receive waste water from a drain line of the plurality of drain lines. The waste water sub-system further includes a main drain line in fluid communication with at least one of a drain line of the plurality of drain lines or a waste water sump of the plurality of waste water sumps. The aircraft galley plumbing system further includes one or more valves in fluid communication with the potable water sub-system and the waste water sub-system. The potable water sub-system is configured to be filled from the potable water source when the one or more valves are in a first operational configuration. The potable water sub-system is configured to empty into the waste water sub-system via the one or more valves when the one or more valves are in a second operational configuration.

In some embodiments of the aircraft galley plumbing system, a valve of the one or more valves includes a four-way rotary valve.

In some embodiments of the aircraft galley plumbing system, the one or more valves are interlinked to synchronize at least one of an opening sequence or a closing sequence for the one or more valves.

In some embodiments of the aircraft galley plumbing system, the potable water sub-system further includes a potable water filter.

In some embodiments of the aircraft galley plumbing system, the potable water filter is self-venting.

In some embodiments of the aircraft galley plumbing system, the potable water filter is in fluid communication with a potable water supply line of the plurality of potable water supply lines.

In some embodiments of the aircraft galley plumbing system, the potable water filter is in fluid communication with the potable water source via a potable water source line.

In some embodiments of the aircraft galley plumbing system, the potable water filter is in fluid communication with the one or more valves via a dedicated drain line.

In some embodiments of the aircraft galley plumbing system, the at least one potable water filter is configured to empty into the waste water sub-system through the one or more valves via the at least one dedicated drain line when the one or more valves are in the second operational configuration.

In some embodiments of the aircraft galley plumbing system, the potable water sub-system is configured to empty into the waste water sub-system through the one or more valves via the at least one dedicated drain line when the one or more valves are in the second operational configuration.

In some embodiments of the aircraft galley plumbing system, the potable water sub-system further includes at least one vent valve in fluid communication with at least one potable water supply line of the plurality of potable water supply lines.

In some embodiments of the aircraft galley plumbing system, the potable water sub-system further includes a faucet in fluid communication with a potable water supply line of the plurality of potable water supply lines via a faucet supply line.

In some embodiments of the aircraft galley plumbing system, at least some potable water supply lines of the plurality of potable water supply lines are arranged in a supply line loop configured to prevent backflow of potable water into the faucet supply line of the faucet.

In some embodiments of the aircraft galley plumbing system, the faucet is self-venting.

In some embodiments of the aircraft galley plumbing system, the waste water sub-system further includes a sink in fluid communication with the main drain line. The faucet is positioned above and configured to flow into the sink.

In some embodiments of the aircraft galley plumbing system, the waste water sub-system further includes a compact drain strainer configured to receive waste water from the main drain line. The compact drain strainer is configured to at least one of filter waste water or prevent waste water backflow into the waste water sub-system.

In some embodiments of the aircraft galley plumbing system, the at least one galley installation includes at least one of a beverage maker, a chiller, a refrigerator, or a freezer.

In some embodiments of the aircraft galley plumbing system, the aircraft galley plumbing system further includes a service wall. One or more components of the potable water sub-system, one or more components of the waste water sub-system, and the one or more valves are coupled to the service wall. The potable water sub-system and the waste water sub-system, wherein the potable water sub-system, the waste water sub-system, the one or more valves, and the service wall are configured to be installed as a single aircraft galley plumbing unit within an aircraft galley of an aircraft.

An aircraft galley plumbing system is also disclosed. In one or more embodiments, the aircraft galley plumbing system includes a potable water sub-system. The potable water sub-system includes a plurality of potable water supply lines. A potable water supply line of the plurality of potable water supply lines is configured to provide potable water from a potable water source to at least one galley installation. The potable water sub-system further includes a faucet in fluid communication with a potable water supply line of the plurality of potable water supply lines via a faucet supply line. The aircraft galley plumbing system further includes a waste water sub-system. The waste water sub-system includes a plurality of drain lines. A drain line of the plurality of drain lines is configured to receive waste water from the at least one galley installation. The waste water sub-system further includes a plurality of waste water sumps. A waste water sump of the plurality of waste water sumps is configured to receive waste water from a drain line of the plurality of drain lines. The waste water sub-system further includes a sink. The faucet is positioned above and configured to flow into the sink. The waste water sub-system further includes a main drain line in fluid communication with at least one of a drain line of the plurality of drain lines or a waste water sump of the plurality of waste water sumps. The aircraft galley plumbing system further includes one or more valves in fluid communication with the potable water sub-system and the waste water sub-system.

An aircraft galley plumbing system is disclosed. In one or more embodiments, the aircraft galley plumbing system includes a potable water sub-system. The potable water sub-system includes a plurality of potable water supply lines. A potable water supply line of the plurality of potable water supply lines is configured to provide potable water from a potable water source to at least one galley installation. The aircraft galley plumbing system further includes a waste water sub-system. The waste water sub-system includes a plurality of drain lines. A drain line of the plurality of drain lines is configured to receive waste water from the at least one galley installation. The waste water sub-system further includes a plurality of waste water sumps. A waste water sump of the plurality of waste water sumps is configured to receive waste water from a drain line of the plurality of drain lines. The waste water sub-system further includes a main drain line in fluid communication with at least one of a drain line of the plurality of drain lines or a waste water sump of the plurality of waste water sumps. The aircraft galley plumbing system further includes one or more valves in fluid communication with the potable water sub-system and the waste water sub-system. The aircraft galley plumbing system further includes a service wall. One or more components of the potable water sub-system, one or more components of the waste water sub-system, and the one or more valves are coupled to the service wall. The potable water sub-system, the waste water sub-system, the one or more valves, and the service wall are configured to be installed as a single aircraft galley plumbing unit within an aircraft galley of an aircraft.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a plan view of an aircraft galley plumbing system, in accordance with one or more embodiments of the present disclosure;
FIG. 1B illustrates a perspective view of an aircraft galley plumbing system, in accordance with one or more embodiments of the present disclosure;
FIG. 2 illustrates a plan view of an aircraft galley including an aircraft galley plumbing system, in accordance with one or more embodiments of the present disclosure; and
FIG. 3 is a block diagram illustrating an aircraft including an aircraft galley plumbing system, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

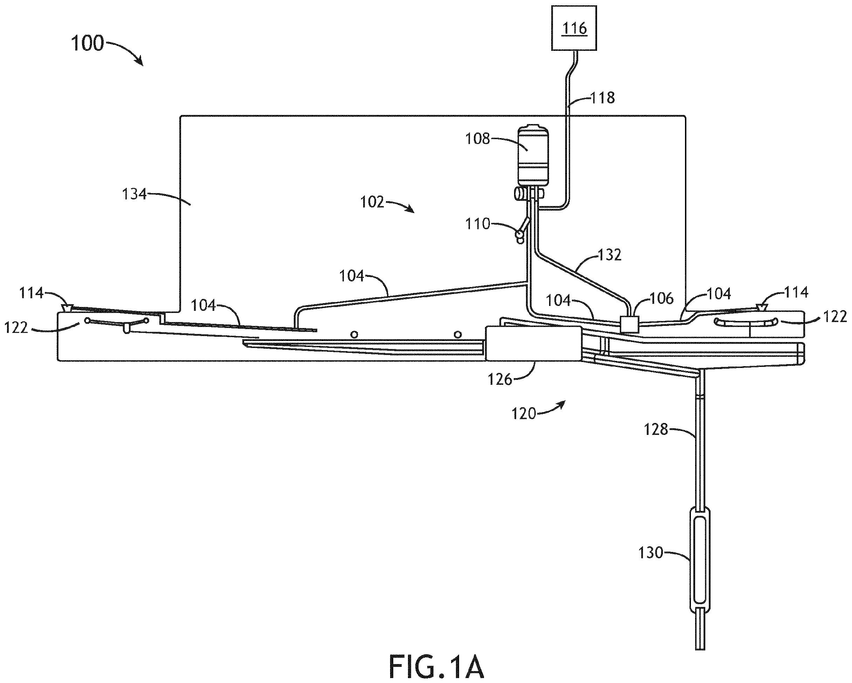

FIGS. 1A-3 generally illustrate an aircraft galley plumbing system 100. It is noted herein that "aircraft galley plumbing system 100" and "galley plumbing system 100" may be considered equivalent for purposes of the present disclosure.

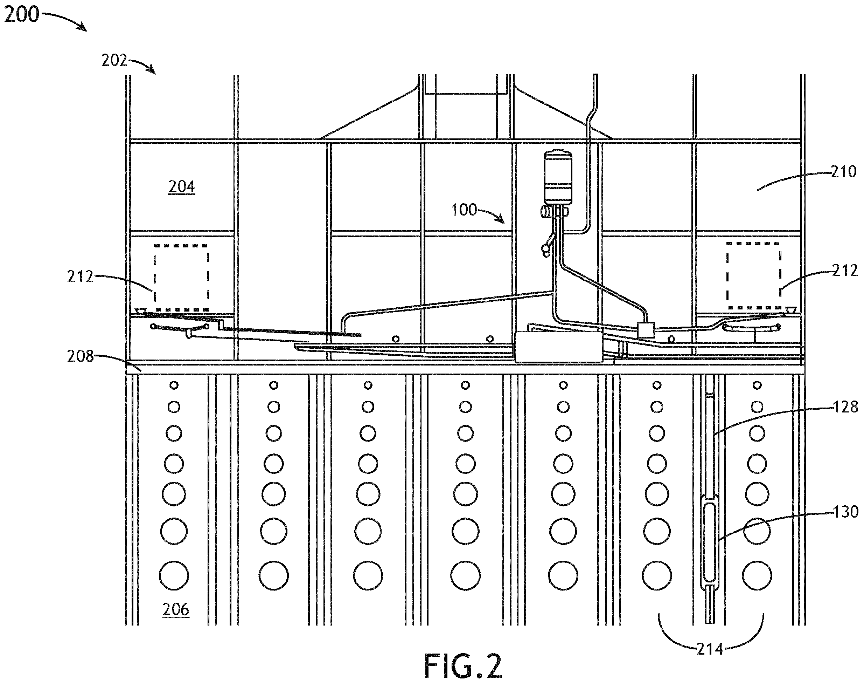

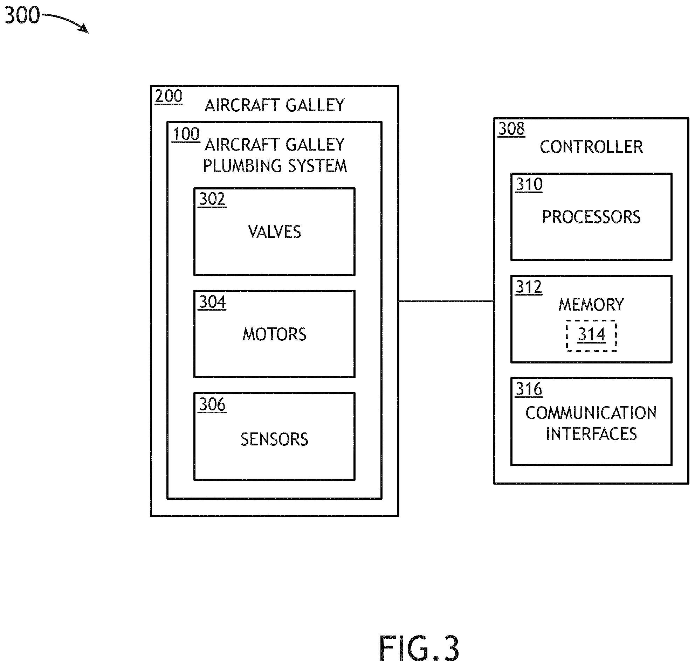

The aircraft galley plumbing system 100 may be housed and/or installed within an aircraft galley (e.g., an aircraft galley 200, as illustrated in FIG. 2) of an aircraft (e.g., an aircraft 300, as illustrated in FIG. 3).

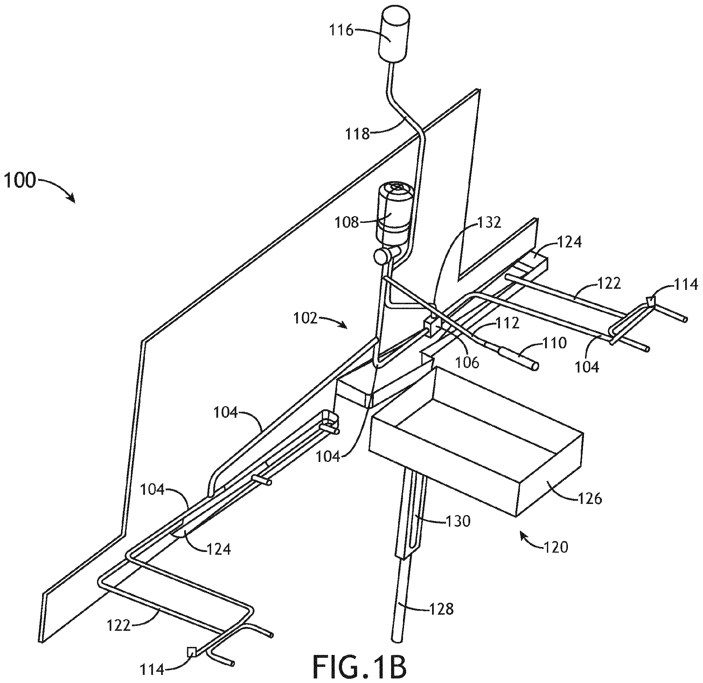

FIGS. 1A and 1B illustrate the aircraft galley plumbing system 100, in accordance with one or more embodiments of the present disclosure.

The aircraft galley plumbing system 100 may include a potable water sub-system (or manifold) 102. The potable water sub-system 102 may include one or more potable water supply lines 104. The one or more potable water supply lines 104 may be in fluid communication with and/or proximate to one or more components in fluid communication with and/or proximate to the potable water sub-system 102. For example, the one or more components in fluid communication with and/or proximate to the potable water sub-system 102 may include, but are not limited to, one or more galley installations (e.g., beverage makers, refrigerators, chillers, freezers, dishwashers, or the like), one or more drip trays of the one or more galley installations, or the like.

At least some of the one or more potable water supply lines 104 may be in fluid communication with one or more valves 106, such that the potable water sub-system 102 may be configured to fill via the one or more valves 106 when the one or more valves 106 are in a select operational configuration (e.g., a mode of operation). For example, the one or more valves 106 may include, but is not limited to, one or more four-way (e.g., "cruciform") rotary valves. An example of a four-way rotary valve is described in further detail in United States Patent Application No. 16/526,553, filed on July 30, 2019.

One or more motors may be coupled to the one or more valves 106. For example, the one or more motors may include, but are not limited to, one or more servo motors, one or more stepper motors, or one or more other motors configured to be controlled (e.g., driven) via a controller.

At least some of the one or more potable water supply lines 104 may be in fluid communication with one or more potable water filters 108.

At least some of the one or more potable water supply lines 104 may be in fluid communication with one or more faucets 110, where the one or more faucets 110 are fed by one or more faucet supply lines 112 in fluid communication with the at least some of the one or more potable water supply lines 104. At least some of the one or more potable water supply lines 104 may be arranged in a supply line loop configured to prevent backflow of discharged water of a select temperature (e.g., heated or hot water, cooled or cold water, or the like) from reaching the one or more faucets 110 via the one or more faucet supply lines 112. In this regard, crew members operating within the aircraft galley may be protected from faucet 110 discharge at an unexpected temperature.

At least some of the one or more potable water supply lines 104 may be in fluid communication with one or more vent valves 114.

Some combination of the one or more potable water filters 108, the one or more faucets 110, and/or the one or more vent valves 114 may be configured to open and close and ensure a complete filling of the aircraft galley plumbing system 100. For example, the one or more potable water filters 108, the one or more faucets 110, and/or the one or more vent valves 114 may be configured as self-venting components of the aircraft galley plumbing system 100. By way of another example, the one or more potable water filters 108, the one or more faucets 110, and/or the one or more vent valves 114 may be configured as manually-controlled or electrically-controlled components of the aircraft galley plumbing system 100 (e.g., are conventional components of the aircraft galley plumbing system 100).

One or more sub-systems of the aircraft galley plumbing system 100 (e.g., the potable water sub-system 102) may be filled and/or drained from one or more potable water sources 116. For example, the potable water source 116 may be located within a ceiling, behind a side wall, or positioned elsewhere proximate to a surface of the aircraft galley.

The one or more potable water sources 116 may be in fluid communication with one or components of the one or more sub-systems of the aircraft galley plumbing system 100 via one or more potable water source lines 118. For example, the one or more potable water sources 116 may be in fluid communication with the one or more valves 106 via the one or more potable water source lines 118. By way of another example, the one or more potable water sources 116 may be in fluid communication with the one or more water filters 108 via the one or more potable water source lines 118.

The aircraft galley plumbing system 100 may include a waste water sub-system 120. The waste water sub-system 120 and the potable water sub-system 102 may be in fluid communication via the one or more valves 106. For example, the waste water sub-system 120 and the potable water sub-system 102 may be in fluid communication via a four-way (e.g., "cruciform") rotary valve. An example of a four-way rotary valve is described in further detail in United States Patent Application No. 16/526,553, filed on July 30, 2019.

The potable water sub-system 102 may be configured to drain or empty into the waste water sub-system 120 via the one or more valves 106 (e.g., the one or more four-way rotary valves) when the one or more valves 106 are in a select operational configuration. It is noted herein that the select operational configuration to fill the potable water sub-system 102 via the one or more valves 106 may be different (e.g., is at least a first configuration) than the select operational configuration to drain or empty the potable water sub-system 102 into the waste water sub-system 120 via the one or more valves 106 (e.g., is at least a second configuration).

The waste water sub-system 120 may include one or more drain lines 122. The one or more drain lines 122 may be in fluid communication with and/or proximate to one or more components in fluid communication with and/or proximate to the waste water sub-system 120. For example, the one or more components in fluid communication with and/or proximate to the waste water sub-system 120 may include, but are not limited to, one or more galley installations (e.g., beverage makers, chillers, refrigerators, freezers, or the like), one or more drip trays of the one or more galley installations, or the like.

The waste water sub-system 120 may include one or more waste water sumps 124. The one or more waste water sumps 124 may indirectly collect waste water, where at least some of the one or more drain lines 122, one or more drip trays, chiller condensate, or the like may drain into the one or more waste water sumps 124. It is noted herein, however, that at least some of the one or more components in fluid communication with and/or proximate to the waste water sub-system 120 may drain directly (e.g., the one or more drip trays, chiller condensate, or the like) into the one or more waste water sumps 124. For example, the one or more valves 106 may drain or empty directly into the one or more waste water sumps 124 when the one or more valves 106 are in a select operational configuration.

The waste water sub-system 120 may include one or more sinks 126. The one or more faucets 110 may be positioned above and flow into the one or more sinks 126. It is noted herein, however, that the one or more sinks 126 may indirectly collect waste water, where at least some of the one or drain lines 122 and/or the one or more waste water sumps 124 may drain into the one or more sinks 126.

At least some components of the waste water sub-system 120 (e.g., the one or more drain lines 122, the one or more waste water sumps 124, the one or more sinks 126, or the like) may be in fluid communication with one or more main drain lines 128. For example, the one or more waste water sumps 124 may be fitted with mesh screens to prevent blockage of the one or more main drain lines 128. For instance, the mesh screens may be recessed within the one or more waste water sumps 124. At least some components of the waste water sub-system 120 (e.g., the one or more drain lines 122, the one or more waste water sumps 124, the one or more sinks 126, or the like) may be configured to prevent waste water backflow into the waste water sub-system 120.

The one or more main drain lines 128 may be in fluid communication with one or more compact drain strainers 130, where the one or more compact drain strainers 130 may be configured to at least one of filter the waste water and/or act as an anti-backflow device into the waste water sub-system 120 and/or the potable water sub-system 102 (e.g., through the one or more valves 106). For example, at least some components of the waste water sub-system 120 (e.g., the one or more drain lines 122, the one or more waste water sumps 124, the one or more sinks 126, or the like) may be in fluid communication with the one or more compact drain strainers 130 via the one or more main drain lines 128 (e.g., are indirectly in fluid communication with the one or more compact drain strainers 130). It is noted herein, however, that at least some components of the waste water sub-system 120 (e.g., the one or more drain lines 122, the one or more waste water sumps 124, the one or more sinks 126, or the like) may be directly in fluid communication with the one or more compact drain strainers 130.

The aircraft galley plumbing system 100 may include one or more potable water drain lines 132 within the potable water sub-system 102. The one or more potable water drain lines 132 may be in fluid communication with at least one of the one or more potable water supply lines 104, the one or more potable water filters 108, the one or more potable water source lines 118, or other components of the potable water sub-system 102. For instance, the potable water sub-system 102 may include a dedicated drain line 132 in fluid communication with the one or more valves 106 and the one or more potable water filters 108, such that the one or more potable water filters 108 may be configured to empty into the waste water sub-system 120 through the one or more valves 106 via the dedicated drain line 132. In addition, the potable water sub-system 102 may include a dedicated drain line 132 in fluid communication with the one or more valves 106, such that the potable water sub-system 102 may be configured to empty into the waste water sub-system 120 through the one or more valves 106 via the dedicated drain line 132.

The one or more potable water drain lines 132 may be in fluid communication with the one or more valves 106. For example, the one or more potable water drain lines 132 may be closed during operation of the aircraft (e.g., aircraft 300, as illustrated in FIG. 3) and/or components within the aircraft galley (e.g., aircraft galley 200, as illustrated in FIG. 2), and may drain through the one or more valves 106 when operation of the aircraft and/or components within the aircraft galley is completed (e.g., at an end of a flight).

The aircraft galley plumbing system 100 may include and/or be coupled proximate to one or more service walls 134. It is noted herein the components of the potable water sub-system 102, the components of the waste water sub-system 120, and the one or more service walls 134 may be manufactured or fabricated together and installed as a single aircraft galley plumbing unit within the aircraft galley (e.g., aircraft galley 200, as illustrated in FIG. 2) of the aircraft (e.g., aircraft 300, as illustrated in FIG. 3). For example, the single aircraft galley plumbing unit may include all plumbing sub-system components (e.g., for both potable water and waste water), electrical sub-system components, and/or air sub-system components necessary for installation and operation of the aircraft galley plumbing system 100 within the aircraft galley of the aircraft.

It is noted herein that the aircraft galley plumbing system 100 may incorporate a minimum drainage angle of three degrees (3°), as set forth in rules, regulations, and statutes prescribed by or otherwise related to the Federal Aviation Administration (FAA). In addition, it is noted herein the aircraft galley plumbing system 100 may not include any water traps. Further, it is noted herein the aircraft galley plumbing system 100 may be configured to drain or empty components including, but not limited to, the potable water filter 108, potable water supply lines 104, or other components of the potable water sub-system 102 to the waste water sub-system 120 via the one or more valves 106 when the one or more valves 106 are in a select operational configuration. In this regard, the potable water sub-system 104 and/or the waste water sub-system 106 may be flushed via the one or more valves 106 when in a select operational configuration prior to commencing in-flight service operations as part of a start-up sequence for the aircraft (e.g., the aircraft 300, as illustrated in FIG. 3).

In this regard, the aircraft galley plumbing system 100 may be in a configuration that is simpler than known designs, improving upon the known designs by using a potable water distribution sub-system (e.g., the potable water sub-system 102) to both supply and drain the aircraft galley plumbing system 100.

FIG. 2 illustrates a partial plan view of an aircraft galley 200, in accordance with one or more embodiments of the present disclosure.

The aircraft galley 200 may include a work deck 202. The work deck 202 may be split into an above work deck section 204 and a below work deck section 206 by a work deck split line 208.

The above work deck section 204 may include one or more above work deck structures 210. For example, the one or more above work deck structures 210 may include, but are not limited to, one or more aircraft galley architecture such as cabinets, compartments, or the like. For instance, the one or more above work deck structures 210 may include a location for one or more galley installations 212.

The below work deck section 206 may include one or more chilled air return plenums 214. At least one of the one or more main drain lines 128 and/or the one or more compact drain strainers 130 may be configured to fit between the one or more chilled air return plenums 214.

FIG. 3 illustrates a block diagram illustrating an aircraft 300 including the aircraft galley plumbing system 100, in accordance with one or more embodiments of the present disclosure.

The aircraft galley plumbing system 100 may include one or more valves 302.

The one or more valves 302 may be interspersed within the fluid flow of the potable water sub-system 102. For example, the one or more valves 302 may be interlinked, such that any opening and/or closing sequences within the potable water sub-system 102 may be synchronized to prevent continuous discharge of the aircraft potable water supply and/or to flush the aircraft potable water supply. By way of another example, the one or more valves 302 may be interlinked, such that any opening and/or closing sequences within the potable water sub-system 102 may be synchronized to act as a failsafe for the aircraft galley plumbing system 100.

The one or more valves 302 may be interspersed within the fluid flow of the waste water sub-system 120. For example, the one or more valves 302 may be interlinked, such that any opening and/or closing sequences within the waste water sub-system 120 may be synchronized to prevent continuous discharge of the aircraft waste water supply and/or to flush the aircraft waste water supply. By way of another example, the one or more valves 302 may be interlinked, such that any opening and/or closing sequences within the waste water sub-system 120 may be synchronized to act as a failsafe for the aircraft galley plumbing system 100.

In this regard, where the one or more valves 302 may include, but are not limited to, one or more main water shut-off valves and the one or more valves 106 that are interlinked to ensure both cannot be opened simultaneously (e.g., which may result in an unintended draining of the aircraft galley plumbing system 100).

It is noted herein the one or more secondary valves 302 may be interspersed within the fluid flow of the either of the potable water sub-system 102 and the fluid flow of the waste water sub-system 120, or both of the potable water sub-system 102 and the fluid flow of the waste water sub-system 120.

The one or more valves 302 may be electrically-controlled. For example, the one or more valves 302 may be coupled to one or more motors 304. For instance, the one or more motors 304 may include, but are not limited to, one or more servo motors, one or more stepper motors, or one or more other motors configured to be controlled (e.g., driven) via a controller. It is noted herein, however, that the one or more valves 302 may be manually-controlled and/or mechanically-controlled. For example, the one or more valves 302 may be controlled via a toggle, switch, cable assembly, or other mechanical operating mechanism.

The aircraft galley plumbing system 100 may include one or more sensors 306. For example, the one or more sensors 306 may be configured to record and transmit a position of the one or more valves 302.

The aircraft 300 may include one or more controllers 308. The one or more motors 304 may be communicatively coupled to and configured to receive data from one or more controllers 308 within the aircraft 300. The one or more sensors 306 may be communicatively coupled to and configured to transmit data to the one or more controllers 308. For example, the one or more sensors 306 may be positioned and configured to monitor the potable water sub-system 102 (e.g., potable water levels, potable water fluid flow rate, or other metrics related to the operation of the potable water sub-system 102). By way of another example, the one or more sensors 306 may be positioned and configured to monitor the waste water sub-system 120 (e.g., waste water levels, waste water fluid flow rate, or other metrics related to the operation of the waste water sub-system 120).

The one or more controllers 308 may include at least one of one or more processors 310, memory 312 configured to store one or more sets of program instructions 314, and/or one or more communication interfaces 316.

The one or more processors 310 provides processing functionality for at least the one or more controllers 308 and may include any number of processors, micro-controllers, circuitry, field programmable gate array (FPGA) or other processing systems, and resident or external memory for storing data, executable code, and other information accessed or generated by the one or more controllers 308. The one or more processors 310 may execute one or more software programs (e.g., the one or more sets of program instructions 314) embodied in a non-transitory computer readable medium (e.g., the memory 312) that implement techniques described herein. The one or more processors 310 are not limited by the materials from which it is formed or the processing mechanisms employed therein and, as such, may be implemented via semiconductor(s) and/or transistors (e.g., using electronic integrated circuit (IC) components), and so forth.

The memory 312 may be an example of tangible, computer-readable storage medium that provides storage functionality to store various data and/or program code associated with operation of the one or more controllers 308 and/or one or more processors 310, such as software programs and/or code segments, or other data to instruct the one or more processors 310, and possibly other components of the one or more controllers 308, to perform the functionality described herein. Thus, the memory 312 may store data, such as a program of instructions for operating the one or more controllers 308, including its components (e.g., one or more processors 310, the one or more communication interfaces 316, or the like), and so forth. It should be noted that while a single memory 312 is described, a wide variety of types and combinations of memory (e.g., tangible, non-transitory memory) may be employed. The memory 312 may be integral with the one or more processors 310, may include stand-alone memory, or may be a combination of both. Some examples of the memory 312 may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The one or more communication interfaces 316 may be operatively configured to communicate with components of the one or more controllers 308. For example, the one or more communication interfaces 316 may be configured to retrieve data from the one or more processors 310 or other devices, transmit data for storage in the memory 312, retrieve data from storage in the memory 312, and so forth. The one or more communication interfaces 316 may also be communicatively coupled with the one or more processors 310 to facilitate data transfer between components of the one or more controllers 308 and the one or more processors 310. It should be noted that while the one or more communication interfaces 316 is described as a component of the one or more controllers 308, one or more components of the one or more communication interfaces 316 may be implemented as external components communicatively coupled to the one or more controllers 308 via a wired and/or wireless connection. The one or more controllers 308 may also include and/or connect to one or more input/output (I/O) devices. In embodiments, the one or more communication interfaces 316 includes or is coupled to a transmitter, receiver, transceiver, physical connection interface, or any combination thereof.

The one or more communication interfaces 316 may be operatively configured to communicate with one or more data input devices. The one or more communication interfaces 316 may be operatively configured to communicate with components of one or more display devices. The one or more data input devices and the one or more display devices may be components of one or more user interfaces. The controller 308 and the one or more user interfaces may be separate components (e.g., have separate housings and/or separate chassis). It is noted herein, however, that the controller 308 and the one or more user interfaces may be components integrated in a single housing and/or on a single chassis.

The one or more controllers 308 may be configured to perform one or more process steps, as defined by the one or more sets of program instructions 314. For example, the one or more process steps may include the processes to operate the one or more valves 106 and select a particular operational configuration for the one or more valves 106. By way of another example, the one or more process steps may include the processes to open and/or close the one or more valves 106 and the one or more valves 302 in a particular order (e.g., via driving the one or more motors 304 and/or the one or more motors coupled to the one or more valves 106, respectively) to interlink the one or more valves 106 and the one or more valves 302 to prevent continuous discharge of the aircraft potable water supply and/or to flush the aircraft potable water supply.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as nonlimiting examples unless otherwise specified in the claims.

## Claims

1. An aircraft galley plumbing system (100), comprising:
a potable water sub-system (102), comprising:
a plurality of potable water supply lines (104), a potable water supply line of the plurality of potable water supply lines configured to provide potable water from a potable water source to at least one galley installation;
a waste water sub-system (120), comprising:
a plurality of drain lines (122), a drain line of the plurality of drain lines configured to receive waste water from the at least one galley installation;
a plurality of waste water sumps (124), a waste water sump of the plurality of waste water sumps configured to receive waste water from a drain line of the plurality of drain lines; and
a main drain line (128) in fluid communication with at least one of a drain line of the plurality of drain lines or a waste water sump of the plurality of waste water sumps; and
one or more valves (106) in fluid communication with the potable water sub-system and the waste water sub-system,
the potable water sub-system configured to be filled from the potable water source when the one or more valves are in a first operational configuration,
the potable water sub-system configured to empty into the waste water sub-system via the one or more valves when the one or more valves are in a second operational configuration.

2. The aircraft galley plumbing system of Claim 1, wherein a valve of the one or more valves comprises:
a four-way rotary valve; and/or
wherein the one or more valves are interlinked to synchronize at least one of an opening sequence or a closing sequence for the one or more valves.

3. The aircraft galley plumbing system of any preceding claim, wherein the potable water sub-system further comprises:
a potable water filter.

4. The aircraft galley plumbing system of Claim 3, wherein the potable water filter is self-venting.

5. The aircraft galley plumbing system of Claim 3 or 4, wherein the potable water filter is in fluid communication with a potable water supply line of the plurality of potable water supply lines; and/or
wherein the potable water filter is in fluid communication with the potable water source via a potable water source line.

6. The aircraft galley plumbing system of Claim 3, 4, or 5, wherein the potable water filter is in fluid communication with the one or more valves via a dedicated drain line.

7. The aircraft galley plumbing system of Claim 6, wherein the at least one potable water filter is configured to empty into the waste water sub-system through the one or more valves via the dedicated drain line when the one or more valves are in the second operational configuration; and/or
wherein the potable water sub-system is configured to empty into the waste water sub-system through the one or more valves via the dedicated drain line when the one or more valves are in the second operational configuration.

8. The aircraft galley plumbing system of any preceding claim, wherein the potable water sub-system further comprises:
at least one vent valve in fluid communication with at least one potable water supply line of the plurality of potable water supply lines.

9. The aircraft galley plumbing system of any preceding claim, wherein the potable water sub-system further comprises:
a faucet, wherein the faucet is in fluid communication with a potable water supply line of the plurality of potable water supply lines via a faucet supply line.

10. The aircraft galley plumbing system of Claim 9, wherein at least some potable water supply lines of the plurality of potable water supply lines are arranged in a supply line loop configured to prevent backflow of potable water into the faucet supply line of the faucet; and/or
wherein the faucet is self-venting; and/or
wherein the waste water sub-system further comprises:
a sink in fluid communication with the main drain line, wherein the faucet is positioned above and configured to flow into the sink.

11. The aircraft galley plumbing system of any preceding claim, wherein the waste water sub-system further comprises:
a compact drain strainer configured to receive waste water from the main drain line, wherein the compact drain strainer is configured to at least one of filter waste water or prevent waste water backflow into the waste water sub-system.

12. The aircraft galley plumbing system of any preceding claim, wherein the at least one galley installation comprises:
at least one of a beverage maker, a chiller, a refrigerator, or a freezer.

13. The aircraft galley plumbing system of any preceding claim, further comprising:
a service wall, wherein one or more components of the potable water sub-system, one or more components of the waste water sub-system, and the one or more valves are coupled to the service wall,
wherein the potable water sub-system and the waste water sub-system, wherein the potable water sub-system, the waste water sub-system, the one or more valves, and the service wall are configured to be installed as a single aircraft galley plumbing unit within an aircraft galley of an aircraft.

14. An aircraft galley plumbing system (100), comprising:
a potable water sub-system (102), comprising:
a plurality of potable water supply lines (104), a potable water supply line of the plurality of potable water supply lines configured to provide potable water from a potable water source to at least one galley installation; and
a faucet (110) in fluid communication with a potable water supply line of the plurality of potable water supply lines via a faucet supply line;
a waste water sub-system (120), comprising:
a plurality of drain lines (122), a drain line of the plurality of drain lines configured to receive waste water from the at least one galley installation;
a plurality of waste water sumps (124), a waste water sump of the plurality of waste water sumps configured to receive waste water from a drain line of the plurality of drain lines; and
a sink (126), the faucet positioned above and configured to flow into the sink; and
a main drain line (128) in fluid communication with the sink and to at least one of a drain line of the plurality of drain lines or a waste water sump of the plurality of waste water sumps; and
one or more valves (106) in fluid communication with the potable water sub-system and the waste water sub-system.

15. An aircraft galley plumbing system (100), comprising:
a potable water sub-system (102), comprising:
a plurality of potable water supply lines (104), a potable water supply line of the plurality of potable water supply lines configured to provide potable water from a potable water source to at least one galley installation;
a waste water sub-system (120), comprising:
a plurality of drain lines (122), a drain line of the plurality of drain lines configured to receive waste water from the at least one galley installation;
a plurality of waste water sumps (124), a waste water sump of the plurality of waste water sumps configured to receive waste water from a drain line of the plurality of drain lines; and
a main drain line (128) in fluid communication with at least one of a drain line of the plurality of drain lines or a waste water sump of the plurality of waste water sumps;
one or more valves (106) in fluid communication with the potable water sub-system and the waste water sub-system; and
a service wall (134), one or more components of the potable water sub-system, one or more components of the waste water sub-system, and the one or more valves being coupled to the service wall,
the potable water sub-system and the waste water sub-system, wherein the potable water sub-system, the waste water sub-system, the one or more valves, and the service wall being configured to be installed as a single aircraft galley plumbing unit within an aircraft galley of an aircraft.
